# EUROPEAN PATENT APPLICATION

(11) **EP 4 497 606 A1**
(43) Date of publication of application: **29.01.2025**
(21) Application number: 24189680.2
(22) Date of filing: 19.07.2024
(51) Int. Cl.: B41J 3/407, B25J 11/00, B25J 19/02, B41J 11/00

(54) **PRINTING METHOD AND ROBOT SYSTEM**

(30) Priority: 27.07.2023 JP 2023122294
(71) Applicant: Seiko Epson Corporation, Tokyo 160-8801 (JP)
(72) Inventor: FUJISAWA, Akihiro, Suwa-shi,, Nagano 392-8502 (JP); ARAKAWA, Yutaka, Suwa-shi,, Nagano 392-8502 (JP); SAITO, Hidetoshi, Suwa-shi,, Nagano 392-8502 (JP)
(74) Representative: MERH-IP Matias Erny Reichl Hoffmann Patentanwälte PartG mbB

(57) **Abstract**

A printing method using a robot, the robot having a robot main body provided with a robot arm, a print head arranged on the robot arm, and an optical sensor that is provided with an imaging element for imaging a target object and that has a constant relative positional relationship with the print head, the printing method being for performing a printing operation on the target object by relatively moving the target object and the print head along a printing trajectory, the printing method comprising: detecting the actual position of the print head by moving the print head along the printing trajectory and comparing two images captured by the imaging element at different imaging timings and correcting a position of the print head based on a deviation of the actual position from the printing trajectory.

## Description

The present application is based on, and claims priority from JP Application Serial Number 2023-122294, filed July 27, 2023, the disclosure of which is hereby incorporated by reference herein in its entirety.

### BACKGROUND

### 1. Technical Field

The present disclosure relates to a printing method and a robot system.

### 2. Related Art

The printing system described in JP-A-2013-202781 performs printing on a target object by ejecting ink toward the target object while moving a robot provided with a print head mounted at the distal end thereof along a printing trajectory. The printing system includes a rotation angle sensor for detecting the actual position of the print head, and a piezo actuator that is disposed between the sensor and the print head and that is for correcting the position of the print head based on the actual position of the print head. Thus, by correcting the position of the print head based on the actual position of the print head, printing without strips (gaps) is realized.

However, in the JP-A-2013-202781 printing system, since the trajectory of the print head deviates because of vibration, it is difficult to perform high-precision printing. For example, if the target object is not provided with a pattern for image processing, it is difficult to detect shifts in trajectory.

### SUMMARY

The printing method of the present disclosure is A printing method using a robot, the robot having a robot main body provided with a robot arm, a print head arranged on the robot arm, and an optical sensor that is provided with an imaging element for imaging a target object and that has a constant relative positional relationship with the print head,
the printing method being for performing a printing operation on the target object by relatively moving the target object and the print head along a printing trajectory, the printing method comprising:
detecting the actual position of the print head by moving the print head along the printing trajectory and comparing two images captured by the imaging element at different imaging timings and
correcting a position of the print head based on a deviation of the actual position from the printing trajectory.

A robot system according to the present disclosure includes a robot main body including a robot arm;
a tool disposed on the robot arm for performing an operation on a target object;
an optical sensor that includes an imaging element for capturing an image of the target object and that has a constant relative positional relationship with the tool; and
a control device configured to relatively move the target object and the tool along an operation trajectory, detect an actual position of the tool by comparing two images captured by the imaging element at different imaging timings, and correct the position of the tool based on a deviation of the actual position from the operation trajectory.

### BRIEF DESCRIPTION OF THE DRAWINGS

FIG. 1 is an overall view of a robot system according to the first embodiment.
FIG. 2 is a schematic view showing a printing operation.
FIG. 3 is a plan view showing a movement stage.
FIG. 4 is a cross-sectional view of an optical sensor.
FIG. 5 is a schematic diagram showing the detection principle of the optical sensor.
FIG. 6 is a schematic view for explaining a method of detecting the position of the print head.
FIG. 7 is a flowchart for explaining a printing method.
FIG. 8 is a schematic diagram for explaining a problem of the optical sensor.
FIG. 9 is a diagram showing the relationship between the translation amounts Δx and Δy.
FIG. 10 is a diagram showing the relationship between the translation amounts Δx and Δy.
FIG. 11 is a diagram showing a method of measuring inclination θ.
FIG. 12 is a diagram showing a method of measuring the inclination θ.
FIG. 13 is a block diagram showing a circuit for generating an error signal.
FIG. 14 is a block diagram showing a circuit for generating a vibration signal.
FIG. 15 is a block diagram showing a circuit for generating a vibration signal.
FIG. 16 is a block diagram showing a circuit for generating a vibration signal.
FIG. 17 is a flowchart for explaining a modification of the printing method.
FIG. 18 is an overall view of a robot system according to a second embodiment.
FIG. 19 is a schematic view showing a printing operation.
FIG. 20 is a schematic view showing a printing operation.
FIG. 21 is a schematic view showing a printing operation.

### DESCRIPTION OF EMBODIMENTS

Hereinafter, a printing method and a robot system of the present disclosure will be described in detail based on embodiments shown in the accompanying drawings.

### FIRST EMBODIMENT

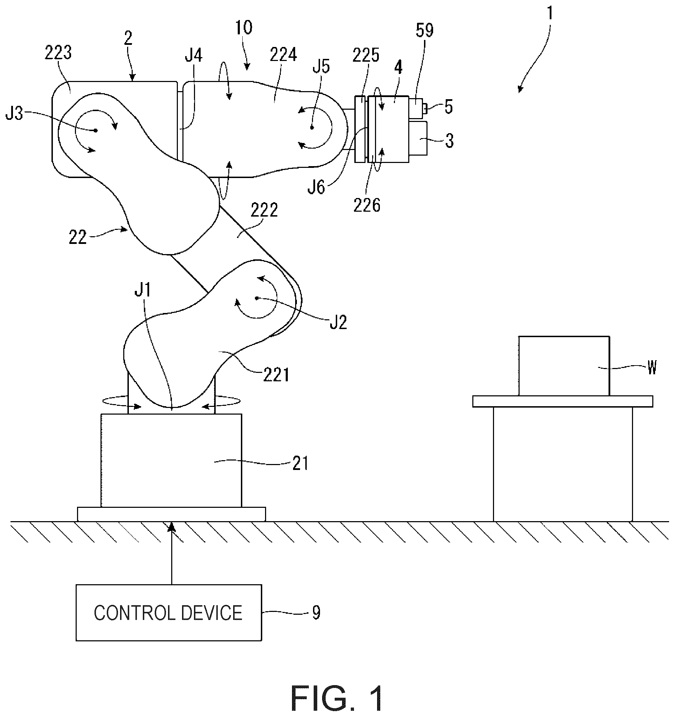

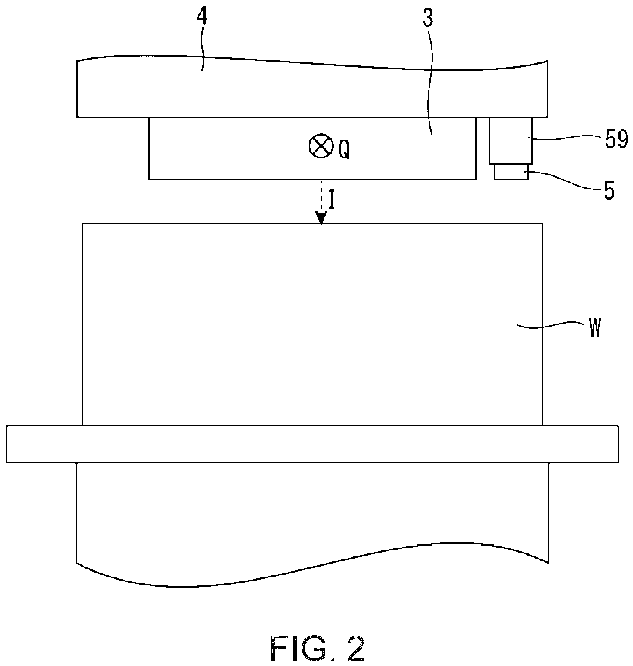

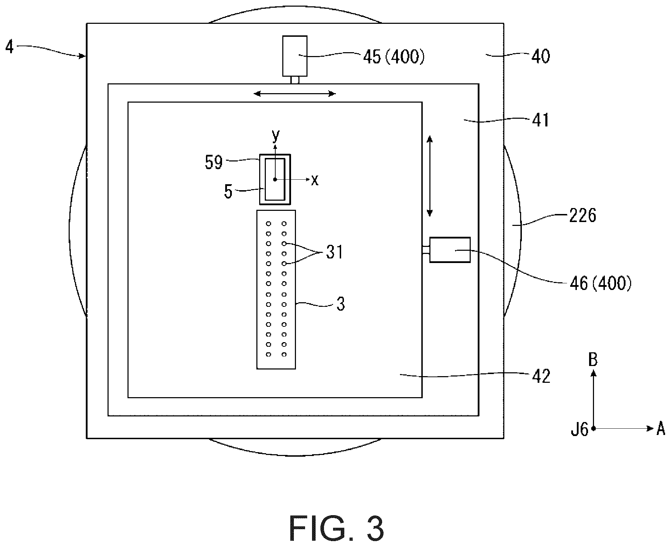

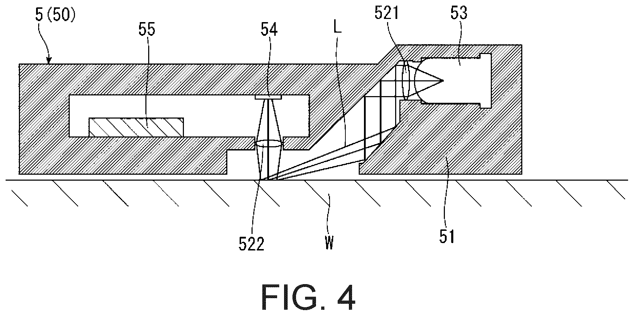

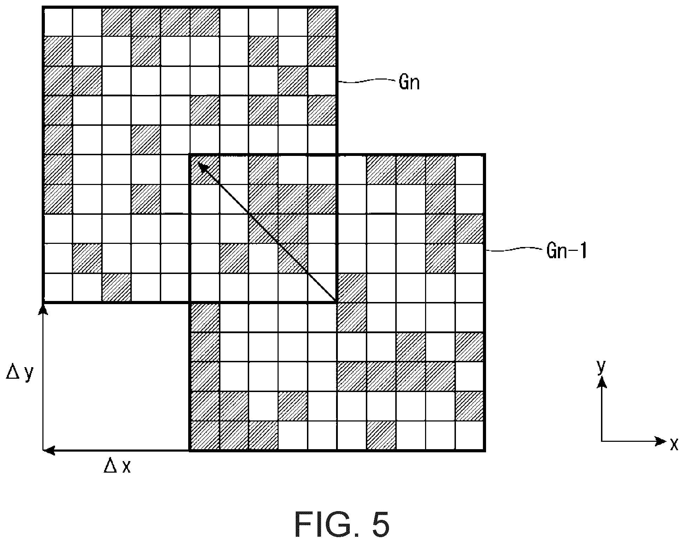

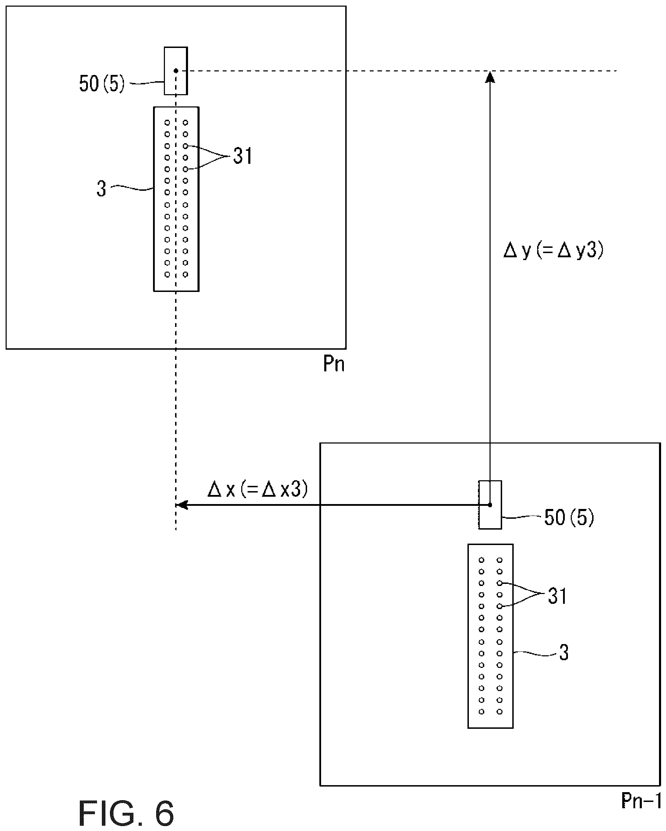

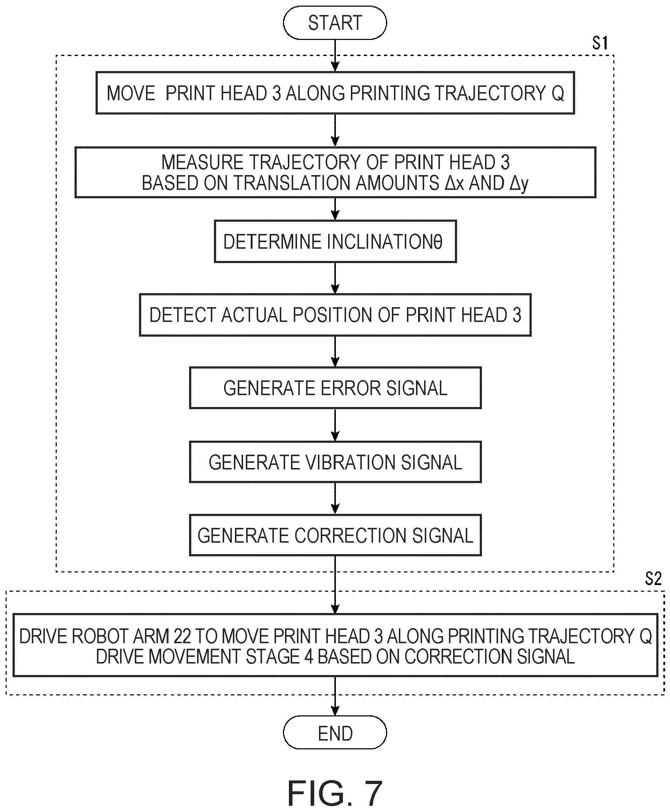

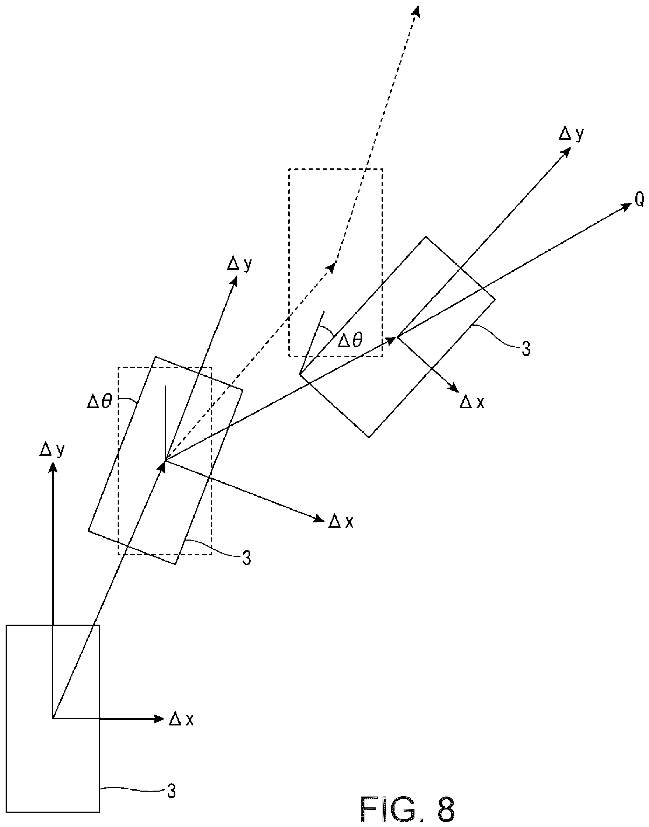

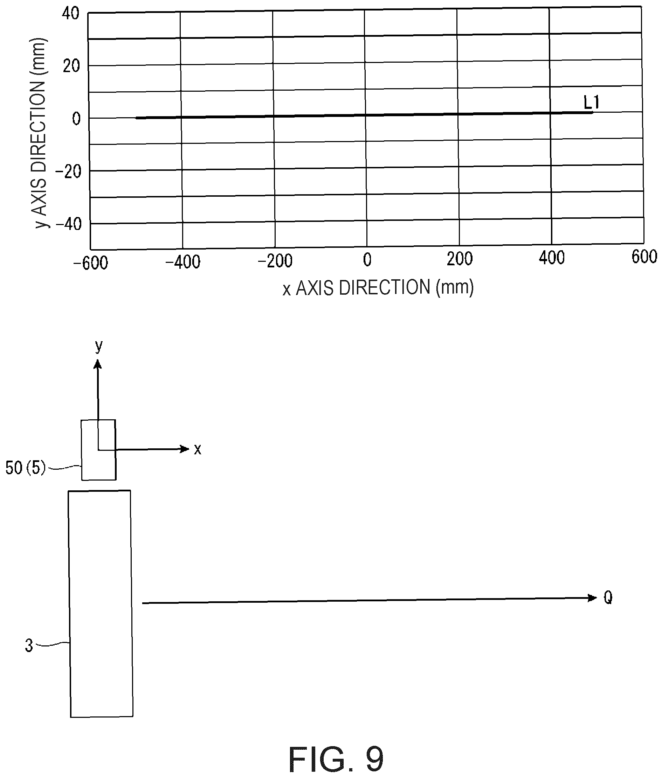

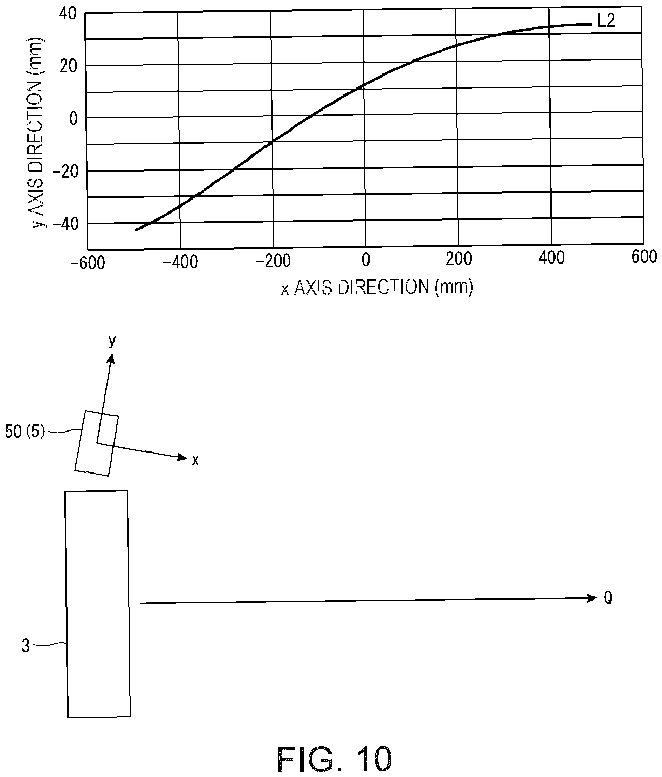

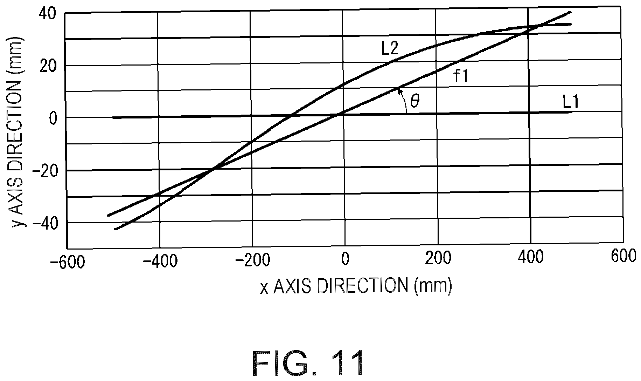

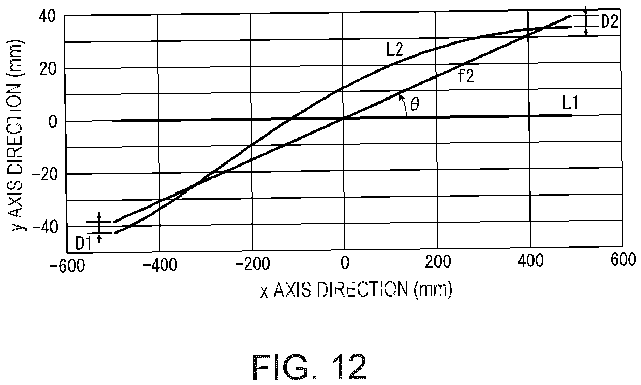

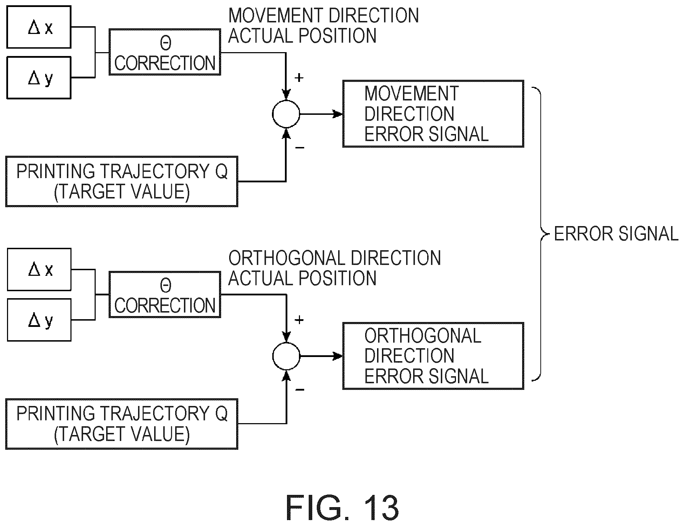

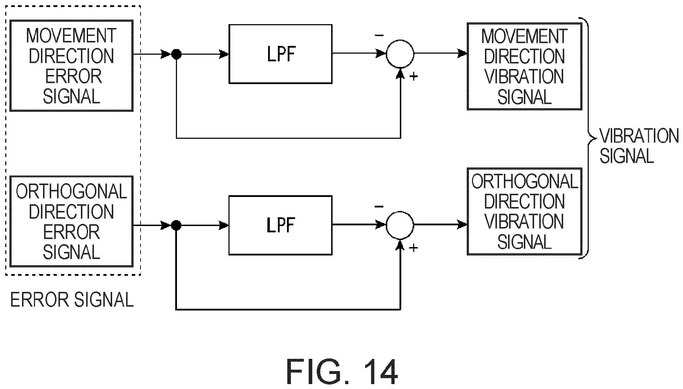

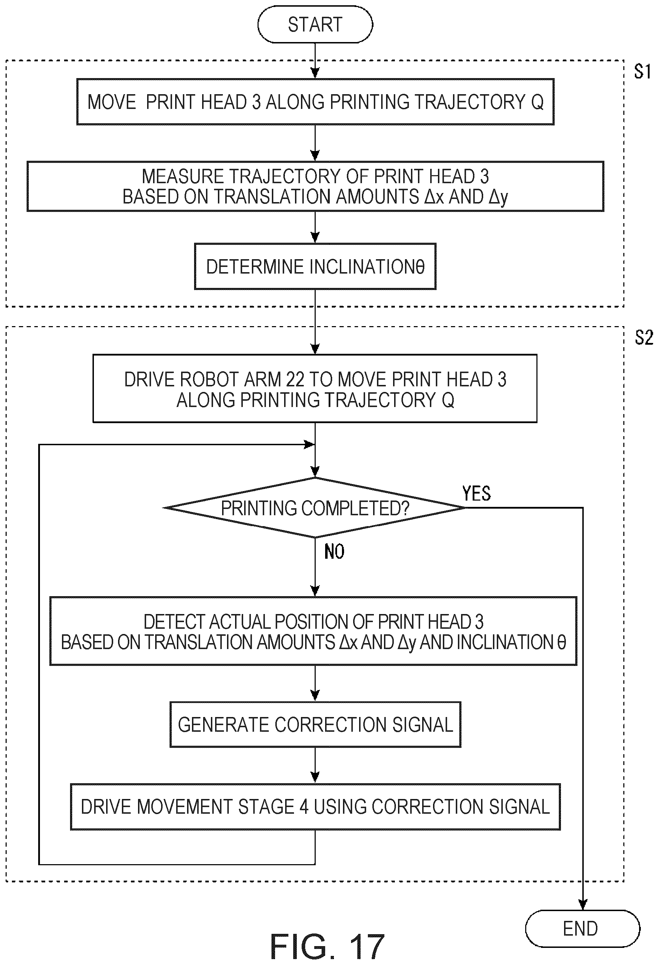

FIG. 1 is an overall view of a robot system according to the first embodiment. FIG. 2 is a schematic view showing a printing operation. FIG. 3 is a plan view showing a movement stage. FIG. 4 is a cross-sectional view of an optical sensor. FIG. 5 is a schematic diagram showing the detection principle of the optical sensor. FIG. 6 is a schematic view for explaining a method of detecting the position of the print head. FIG. 7 is a flowchart for explaining a printing method. FIG. 8 is a schematic diagram for explaining a problem of the optical sensor. FIGS. 9 and 10 are diagrams showing the relationship between translation amounts Δx and Δy. FIGS. 11 and 12 are diagrams showing methods of measuring the inclination θ. FIG. 13 is a block diagram showing a circuit for generating an error signal. FIGS. 14 to 16 are block diagrams showing circuits for generating a vibration signal. FIG. 17 is a flowchart for explaining a modification of the printing method.

The robot system 1 shown in FIG. 1 is applied to a printing system for performing a printing operation on a target object W. A robot system 1 has a robot 10. The robot 10 has a robot main body 2, a print head 3 as a tool mounted on the distal end of the robot main body 2, a movement stage 4 arranged between the robot main body 2 and the print head 3, an optical sensor 5 arranged on the print head 3, and a control device 9 for controlling the drive of the robot 10.

### Robot main body 2

The robot main body 2 is a six axes vertical articulated robot with six drive shafts, and includes a base 21 fixed to a mounting table, floor, or the like, and a robot arm 22 pivotably connected to the base 21. The robot arm 22 has a configuration in which six arms 221, 222, 223, 224, 225, and 226 are pivotably connected in this order from the base 21 side, and is provided with six joints J1, J2, J3, J4, J5, and J6. Among the joints J1 to J6, joints J2, J3, and J5 are bending joints, and joints J1, J4, and J6 are twisting joints. Each of the joints J1, J2, J3, J4, J5, and J6 is equipped with a drive mechanism, which includes a motor as the drive source and an encoder for detecting the amount of rotation of the joint.

However, the configuration of the robot main body 2 is not particularly limited. For example, the number of arms provided in the robot arm 22 is not limited to six. The robot main body 2 may be a double arm robot, a horizontal articulated robot (scalar robot), or the like. The robot main body 2 may not be fixed to a mounting table, a floor, or the like, and may be capable of self-propulsion.

### Print Head 3

The print head 3 is disposed at the distal end of the robot arm 22, that is, on the arm 226. The print head 3 is not particularly limited, but an ink jet head is used in this embodiment. The ink jet head has ink chambers (not shown), vibration plates arranged on a wall surface of the ink chambers (not shown), and ink ejection holes 31 connected to the ink chambers. Ink I in the ink chambers is ejected from the ink ejection holes 31 by vibrating the vibration plates. Also, as shown in FIG. 2, printing is performed by ejecting ink I from the print head 3 while driving the robot arm 22 to move the print head 3 in a predetermined printing trajectory Q with respect to the target object W, so that the ink I adheres to the surface to be printed of the target object W.

### Movement stage 4

The movement stage 4 is disposed between the arm 226 and the print head 3, and is used to correct the position of the print head 3. As shown in FIG. 3, the movement stage 4 includes a base 40 supported by the arm 226, a first stage 41 linearly movable with respect to the base 40 in a first direction A, and a second stage 42 linearly movable with respect to the first stage 41 in a second direction B, which is perpendicular to the first direction A. Also, the print head 3 is disposed on the second stage 42.

The movement stage 4 has a first stage drive section 45 for moving the first stage 41 with respect to the base 40 along the first direction A, and a second stage drive section 46 for moving the second stage 42 with respect to the first stage 41 along the second direction B.

Each of the first and second stage drive sections 45 and 46 is provided with a piezoelectric actuator 400 driven by using the expansion and contraction of piezoelectric elements due to energization, and the vibration of the piezoelectric actuator 400 is transmitted to the first and second stages 41 and 42 to move them. As described above, by using the piezoelectric actuator 400, it is possible to minutely and highly accurately control the movement amount and the movement speed of the first and second stages 41 and 42, and it is also possible to quickly switch the movement direction. Therefore, it is possible to accurately correct the position of the print head 3. It is also possible to reduce the size and weight of movement stage 4. Therefore, it is possible to suppress as much as possible an increase in the weight of the distal end of the robot main body 2 caused by the arrangement of the movement stage 4, and it is possible to effectively suppress a decrease in the drive characteristics such as the responsiveness and the damping property of the robot main body 2.

However, the configuration of the movement stage 4 is not particularly limited. For example, the first and second stage drive sections 45 and 46 may be configured to use a driving source other than the piezoelectric actuator 400, such as a motor that rotates by energization. The movement stage 4 may be omitted. In this case, the position of the print head 3 may be corrected by the robot arm 22.

### Optical Sensor 5

As shown in FIG. 3, the optical sensor 5 is arranged on the second stage 42 of the movement stage 4 together with the print head 3 described above. Therefore, the relative positional relationship between the print head 3 and the optical sensor 5 is kept constant. Also, the position of the print head 3 is detected based on the output of the optical sensor 5.

The optical sensor 5 is an optical tracking sensor 50 which is widely applied in optical mouses. The optical tracking sensor 50 has two detection axes, that is, the x-axis and the y-axis, which are orthogonal to each other, and can independently detect the translation amount Δx in the x-axis direction and the translation amount Δy in the x-and y-axis directions. The optical tracking sensor 50 has a rectangular shape extending along the y-axis in plan view. However, the shape of the optical tracking sensor 50 is not particularly limited, and may be a rectangular shape elongated along the x-axis, a square shape, a circular shape, or the like.

As shown in FIG. 4, the optical tracking sensor 50 includes a base 51, a pair of lens members 521 and 522, a light source 53, an imaging element 54, and a processing device 55. The base 51 is arranged to face the target object W. The light L emitted from the light source 53 is guided to the surface of the target object W by the lens member 521 and reflecting surfaces formed on inner surfaces of the base 51, is reflected by the surface of the target object W, is condensed by the lens member 522, and is received by the imaging element 54. The imaging element 54 continues imaging at a cycle of about 1 ms, and the processing device 55 obtains the translation amount of the optical tracking sensor 50 with respect to the target object W based on the image acquired by the imaging element 54.

Specifically, as shown in FIG. 5, when the target object W is irradiated with light L, light and dark corresponding to minute unevenness in the surface of the target object W appear in the image captured by the imaging element 54. Then, the processing device 55 compares the image Gn newly captured by the imaging element 54 with the image Gn-1 that was captured the previous time, and detects the movement amount of the image Gn with respect to the image Gn-1 by using an optical flow method or the like. That is, the movement amount of the image Gn with respect to the image Gn-1 is detected by comparing the brightness information of the image Gn and the image Gn-1. Also, based on the detection result, the processing device 55 detects translation amounts Δx and Δy of the optical tracking sensor 50 with respect to the target object W during the period from the time when the image Gn-1 was acquired to the time when the image Gn was acquired.

In particular, as in the present embodiment, by irradiating the light L in an oblique direction with respect to the target object W, that is, in a direction inclined with respect to the normal line of the surface to be printed on of the target object W, light and dark appear more clearly, and the translation amounts Δx and Δy can be detected more accurately.

It should be noted that the light source 53 is not particularly limited and, for example, an LED (light emitting diode), a laser light source, or the like can be used. The light L from the light source 53 is not particularly limited and, for example, red light, blue light, infrared light, or the like can be used. The imaging element 54 is not particularly limited, and for example, a CCD image sensor, a CMOS image sensor, or the like can be used.

The optical tracking sensor 50 has been described above. As can be seen from the fact that optical tracking sensors 50 are also widely applied to optical mouses, optical tracking sensors 50 are inexpensive, compact, and have high detection accuracy. Therefore, by using the optical tracking sensor 50 as the optical sensor 5, it is possible to obtain the robot system 1 capable of highly accurate position detection while achieving cost reduction and size reduction.

### Control device 9

The control device 9 controls the robot main body 2, the print head 3, the optical sensor 5, and the movement stage 4 independently or in conjunction with each other. The control device 9 is composed of, for example, a computer, and has a processor (CPU) for processing information, a memory communicably connected to the processor, and an external interface for connecting to external devices. Various programs executable by the processor are stored in the memory, and the processor can read and execute the programs stored in the memory.

The control device 9 uses the optical tracking sensor 50 to detect the position of the print head 3 as follows. As described above, the relative positional relationship between the optical tracking sensor 50 and the print head 3 is constant. Therefore, as shown in FIG. 6, the control device 9 sets the translation amount Δx detected by the optical tracking sensor 50 as the movement amount Δx3 of the print head 3 in the direction along the x-axis without changing it, and sets the translation amount Δy as the movement amount Δy3 of the print head 3 in the direction along the y-axis without changing it. Also, the control device 9 detects the position Pn of the print head 3 by adding the movement amounts Δx3 and Δy3 of the print head 3 that were detected this time to the previously detected position Pn1 of the print head 3. Each time the optical tracking sensor 50 transmits new translation amounts Δx and Δy, the control device 9 repeats the processing described above to update the latest position of the print head 3. The control device 9 can also detect the trajectory of the print head 3 by connecting the repeatedly detected positions of the print head 3 in time series.

The configuration of the robot system 1 has been described above. Next, a printing method of printing on the target object W using the robot system 1 will be described. As shown in FIG. 7, the printing method has a pre-measurement step S1 and a printing step S2. The steps S1 and S2 will be described in detail below.

It should be noted that in the printing method using the robot system 1, the printing trajectory Q is constituted only by the translational motion of the print head 3 and does not substantially include the rotational motion of the print head 3. As described above, the optical tracking sensor 50 can detect only the translation amounts Δx and Δy with respect to the target object W, and cannot detect the rotation amount Δθ with respect to the target object W. Therefore, when the printing trajectory Q includes rotational motion as shown in FIG. 8, a deviation is generated between the position of the print head 3 detected based on the translation amounts Δx and Δy and the actual position of the print head 3 (hereinafter, also simply referred to as actual position). Therefore, by configuring the printing trajectory Q only by the translational motion of the print head 3, it is possible to suppress the deviation between the position of the print head 3 detected based on the translation amounts Δx and Δy and the actual position of the print head 3. By this, even if an inexpensive optical tracking sensor 50 is used, the position of the print head 3 can be detected with high accuracy, and printing can be performed with high accuracy. It should be noted that in the present embodiment, a case where the printing trajectory Q is set along the x-axis will be described.

### Pre-measurement step S1

In this embodiment, since the printing trajectory Q is set along the x-axis, the print head 3 does not move in the y-axis direction while moving along the printing trajectory Q as indicated by the solid line L1 in FIG. 9. However, as shown in FIG. 10, the x-axis may be inclined with respect to the printing trajectory Q due to, for example, mounting accuracy of the optical tracking sensor 50, a setting error of the printing trajectory Q, or the like. That is, the inclination of the x-axis with respect to the printing trajectory Q may deviate from the designed value. When the x-axis is tilted with respect to the printing trajectory Q, the optical tracking sensor 50 continues to move in the y-axis direction during movement along the printing trajectory Q. Therefore, although movement is along the printing trajectory Q, the translation amount Δy continues to increase as indicated by the solid line L2 in the drawing, and accordingly, the position of the print head 3 detected from the translation amounts Δx and Δy is shifted from the actual position of the print head 3.

Vibration generated in the print head 3 also causes the actual position of the print head 3 to deviate from the printing trajectory Q. It should be noted that the solid line L2 in FIG. 10 shows a state in which the positional deviation of the optical tracking sensor 50 and the vibration generated in the print head 3 are superimposed.

Therefore, in the pre-measurement step S1, the control device 9 measures the inclination of the x-axis with respect to the printing trajectory Q in advance before performing the printing operation. To be specific, the control device 9 first moves the print head 3 along the printing trajectory Q under the same conditions as in the actual printing operation except that ink I is not ejected from the print head 3, and the control device 9 measures the trajectory of the print head 3 based on the translation amounts Δx and Δy output from the optical tracking sensor 50. Next, the control device 9 approximates the measured trajectory to a linear function f1 as shown in FIG. 11 using the method of least squares, and stores the inclination of the approximated linear function f1 as the inclination θ of the x-axis with respect to the printing trajectory Q. Alternatively, as shown in FIG. 12, a linear function f2 is obtained in which a separation distance D1 in the y-axis direction at the start point of the printing trajectory Q and the separation distance D2 in the y-axis direction at the end point are equal to each other, and the inclination of the obtained linear function f2 is stored as an inclination θ of the x-axis with respect to the printing trajectory Q. However, the method of calculating the inclination θ is not particularly limited.

Also, as shown in FIG. 13, the control device 9 uses the inclination θ to correct the translation amounts Δx and Δy detected by the optical tracking sensor 50, and detects the actual position of the print head 3 based on the corrected values. In this way, by correcting the translation amounts Δx and Δy using the inclination θ, the inclination of the x-axis with respect to the printing trajectory Q can be cancelled out, and the actual position of the print head 3 can be detected with high accuracy. In this way, according to the robot system 1, even if the target object W is not provided with a pattern for image recognition, the actual position of the print head 3 can be accurately detected.

Further, the control device 9 compares the actual position of the print head 3 with the printing trajectory Q, that is, with the target value, and generates an error signal representing the amount that the actual position of the print head 3 deviates from the printing trajectory Q. Error signals include a movement direction error signal representing deviation in direction along the printing trajectory Q and an orthogonal direction error signal representing deviation in direction orthogonal to the printing trajectory Q.

Next, the control device 9 extracts a vibration component from the error signal generated as described above, and generates a correction signal used for correcting the position of the print head 3.

Specifically, first, the control device 9 generates a vibration signal from which noise is removed by extracting a predetermined frequency component from the error signal. Vibration signals include a movement direction vibration signal obtained by extracting a predetermined frequency component from the moving direction error signal, and an orthogonal direction vibration signal obtained by extracting a predetermined frequency component from the orthogonal direction error signal. It should be noted that in this embodiment, a frequency component of less than 3 Hz is defined as low-frequency noise, a frequency component of 3 Hz or more and 50 Hz or less is defined as vibration component, and a frequency component of more than 50 Hz is defined as high-frequency noise. However, which frequency band is considered as noise and which frequency band is used as the vibration component is not particularly limited, and can be appropriately set according to the characteristics of the apparatus to be used.

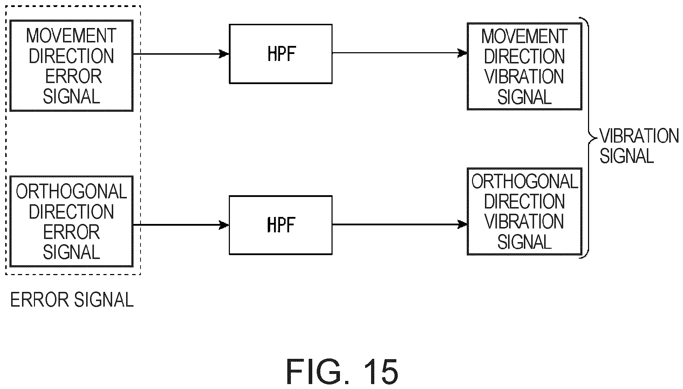

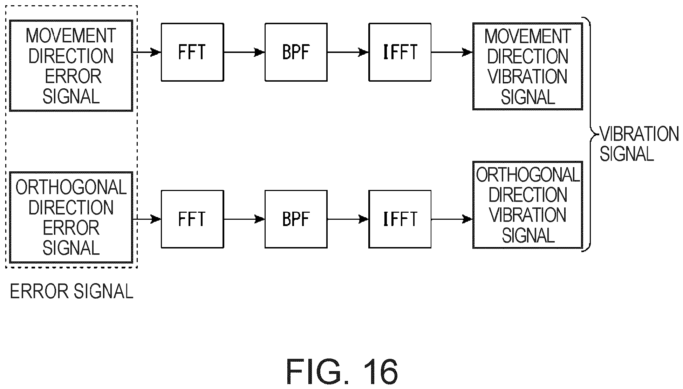

The method of generating the vibration signal from the error signal is not particularly limited, and for example, as shown in FIG. 14, a method of passing the error signal through a low-pass filter LPF may be used. In this case, a low-pass filter LPF that passes frequency signals of less than 3 Hz is used, and the frequency signal that passed is removed from the error signal to obtain a vibration signal from which low-frequency noise has been removed. For example, as shown in FIG. 15, the error signal may be passed through a high-pass filter HPF. In this case, by using a high-pass filter HPF that passes frequency signals of 3Hz or more, a vibration signal in which low-frequency noise has been cut is obtained. For example, as shown in FIG. 16, the error signal is expressed in the frequency domain by Fourier transform (FFT), the frequency component of 3 Hz or more and 50 Hz or less is extracted by a band-pass filter BPF, and finally, the vibration signal in which the low frequency noise and the high frequency noise have been cut is obtained by returning to the time domain expression by inverse Fourier transform (IFFT).

Next, the control device 9 generates an anti-phase signal of the vibration signal and uses this signal as a correction signal. The correction signal includes a movement direction correction signal, which is an anti-phase signal of the moving direction vibration signal, and an orthogonal direction correction signal, which is an anti-phase signal of the orthogonal direction vibration signal.

### Printing step S2

In the printing step S2, while the robot arm 22 is driven to move the print head 3 along the printing trajectory Q, the movement stage 4 is driven based on the correction signal to correct the position of the print head 3. That is, while the robot arm 22 is driven to move the print head 3 along the printing trajectory Q, the movement stage 4 is driven to cancel out the vibration of the print head 3.

According to such a method, the deviation of the actual position of the print head 3 with respect to the printing trajectory Q can be suppressed to a small amount, and desirably the actual position of the print head 3 can be made to coincide with the printing trajectory Q. Therefore, high-precision printing can be performed. In particular, by canceling out the vibration of the print head 3 by driving the movement stage 4, the response to the correction signal is enhanced as compared with the case where the vibration of the print head 3 is canceled by driving the robot arm 22. Therefore, the vibration of the print head 3 can be more accurately cancelled, and printing can be performed with high accuracy. However, the movement stage 4 may be omitted, and the vibration of the print head 3 may be canceled by driving the robot arm 22.

Although the printing method using the robot system 1 has been described above, the printing method is not particularly limited. For example, in the method described above, the correction signal is generated prior to the printing step S2 and, in the printing step S2, the position of the print head 3 is corrected using the correction signal that was generated in advance. However, the present disclosure is not limited to this, and the shift of the print head 3 with respect to the printing trajectory Q may be detected in real time during the printing step S2, and the movement stage 4 may be feedback controlled based on the detection result.

Even in such a case, the printing method has a pre-measurement step S1 and a printing step S2 as shown in FIG. 17. In the pre-measurement step S1, the inclination θ is measured and stored. In the printing step S2, the control device 9 moves the print head 3 along the printing trajectory Q and, at a predetermined cycle during the movement, detects the actual position of the print head 3 based on the translation amounts Δx and Δy, which were detected by the optical tracking sensor 50, and on the inclination θ. Further, the control device 9 generates a correction signal based on the deviation of the actual position with respect to the printing trajectory Q, and uses the generated correction signal to perform feedback control of the drive of the movement stage 4. As described above, by detecting the deviation of the print head 3 from the printing trajectory Q in real time and performing feedback control of the movement stage 4 so that the deviation becomes small, desirably zero, the vibration of the print head 3 can be canceled out with high accuracy, and printing can be performed with high accuracy. It should be noted that, as a method of measuring the inclination θ and a method of generating the correction signal, the above-described methods can be used as appropriate, but the method shown in FIG. 16 cannot be used.

The robot system 1 and the printing method using the robot system 1 have been described above. As described above, this printing method uses the robot 10 having the robot main body 2 provided with the robot arm 22, the print head 3 arranged on the robot arm 22, and the optical sensor 5 that is provided with the imaging element 54 for imaging the target object W and that has a constant relative positional relationship with the print head 3, and is a printing method for performing a printing operation on the target object W by relatively moving the target object W and the print head 3 along the printing trajectory Q, wherein the print head 3 is moved along the printing trajectory Q, the actual position of the print head 3 is detected by comparing two images captured by the imaging element 54 at different imaging timings, and the position of the print head 3 is corrected based on the deviation of the actual position from the printing trajectory Q. According to such a configuration, since the position of the print head 3 is detected on the basis of two images obtained by imaging the target object W, the position of the print head 3 can be detected with high accuracy even if no image recognition pattern is provided on the target object W. By correcting the position of the print head 3 based on the detection result, it is also possible to suppress the deviation of the print head 3 with respect to the printing trajectory Q. Therefore, high-precision printing can be performed.

As described above, the optical sensor 5 is the optical tracking sensor 50, is provided with the light source 53, the lens member 521 for irradiating the target object W with the light L from the light source 53, and the imaging element 54 for receiving the light L reflected by the target object W, and the optical sensor 5 detects the position of the print head 3 by comparing brightness information of two images. According to such a configuration, the position of the print head 3 can be accurately detected.

As described above, the optical sensor 5 irradiates the target object W with the light L from the oblique direction. By this, light and dark corresponding to minute unevenness in the surface of the target object W are likely to appear in the image picked up by the imaging element 54, and the position of the print head 3 can be accurately detected.

As described above, the printing trajectory Q is constituted by the translational motion of the print head 3. By this, even when the optical sensor 5 can detect only the translational motion of the print head 3, it is possible to accurately detect the position of the print head 3.

As described above, the robot 10 is disposed between the robot arm 22 and the print head 3, has the movement stage 4 for displacing the print head 3, and corrects the position of the print head 3 by driving the movement stage 4. By this, the response is enhanced as compared with the case where the position of the print head 3 is corrected by driving the robot arm 22, and the position of the print head 3 can be corrected more accurately.

As described above, the robot system 1 has the robot main body 2 provided with the robot arm 22, the print head 3 that is arranged on the robot arm 22 and that serves as a tool for performing an operation on the target object W, the optical sensor 5 that is provided with the imaging element 54 for imaging the target object W and that has a constant relative positional relationship with the print head 3, and the control device 9 that relatively moves the target object W and the print head 3 along the printing trajectory Q, which is an operation trajectory, that detects the actual position of the print head 3 by comparing two images captured by the imaging element 54 at different imaging timings, and that corrects the position of the print head 3 based on the deviation of the actual position from the printing trajectory Q. According to such a configuration, the position of the print head 3 can be detected based on two images that were taken of the target object W. Therefore, it is possible to accurately detect the position of the print head 3.

As described above, the tool is the print head 3 and the operation is printing. By this, it is possible to perform the printing operation with high accuracy.

### SECOND EMBODIMENT

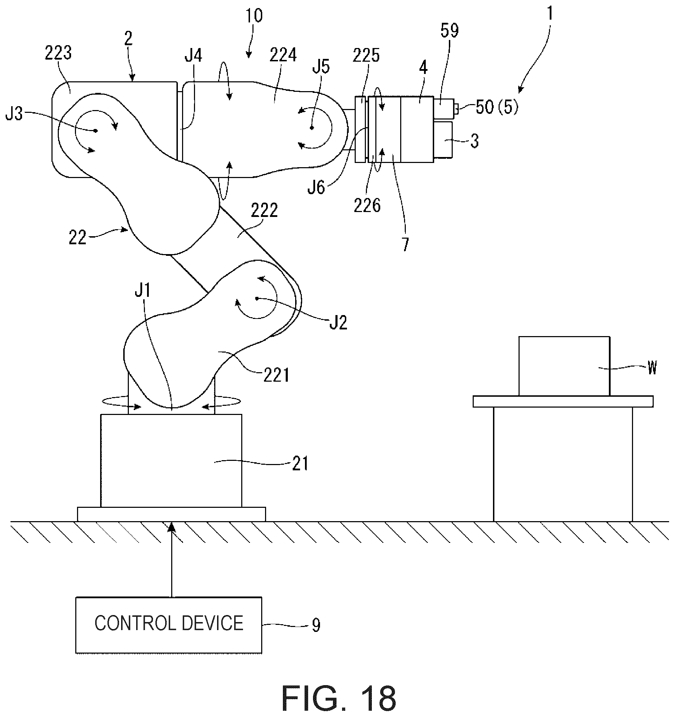

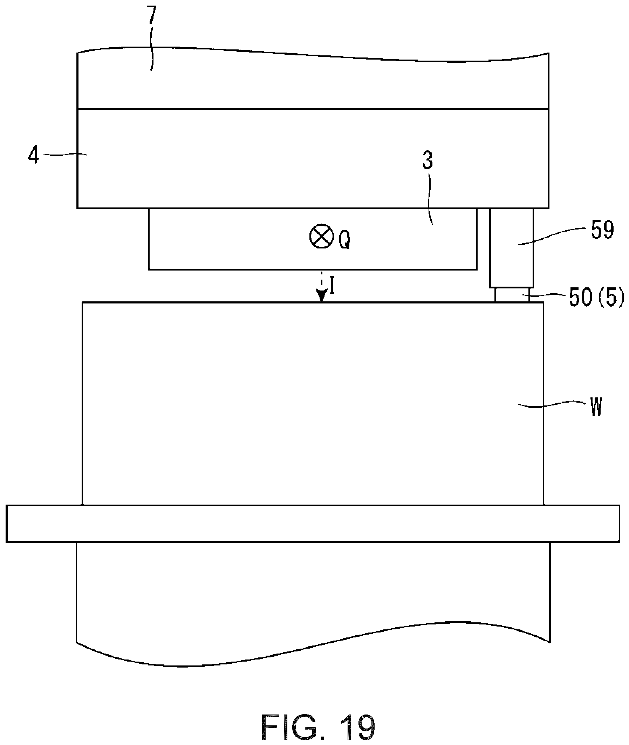

FIG. 18 is an overall view of a robot system according to a second embodiment. FIG. 19 to FIG. 21 are schematic diagrams showing how the printing operation is performed.

The robot system 1 according to the present embodiment is the same as the robot system 1 of the first embodiment except that the robot 10 has the force sensor 7. It should be noted that, in the following description, the differences between the robot system 1 of the present embodiment and the first embodiment will be mainly described, and the description of the same matters will be omitted. In the figures of this embodiment, the same reference numerals are given to the same components as those of the above-described embodiment.

As shown in FIG. 18, in the robot system 1 of the present embodiment, the optical tracking sensor 50 is provided so as to protrude further toward the target object W than does the print head 3. A force sensor 7 is disposed between the robot main body 2 and the movement stage 4. The force sensor 7 has three detection axes orthogonal to each other, and can independently detect a translational force (axial force) along each detection axis and a rotational force (torque) about each detection axis. In such a robot system 1, the force sensor 7 is used to detect contact between the optical tracking sensor 50 and the target object W.

According to such a configuration, by feed back of the detection result of the force sensor 7, as shown in FIG. 19, the print head 3 can be moved along the printing trajectory Q while the optical tracking sensor 50 lightly contacts the target object W with a predetermined force. According to this method, the separation distance between the optical tracking sensor 50 and the target object W can be kept constant. Therefore, detection error of the optical tracking sensor 50 caused by the variation in the separation distance between the optical tracking sensor 50 and the target object W is reduced, and the translation amounts Δx and Δy can be detected with higher accuracy. Since the separation distance between the print head 3 and the target object W can be kept constant, printing can be performed with higher accuracy.

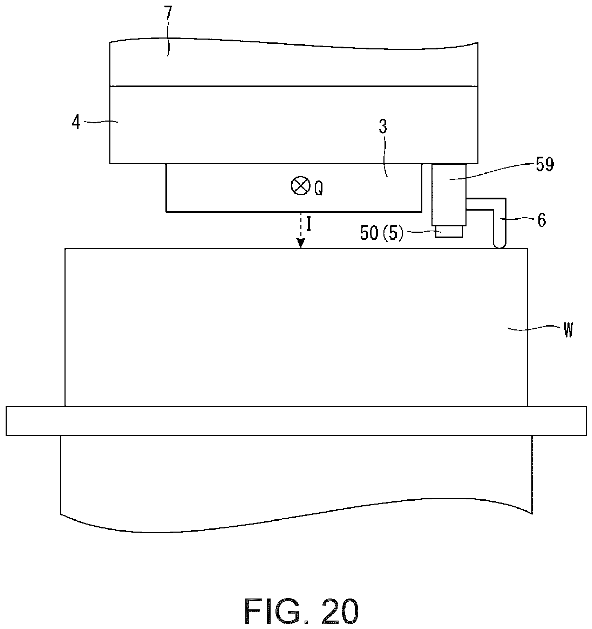

Although the optical tracking sensor 50 is brought into contact with the target object W in the above example, the disclosure is not limited to this and, for example, a contact section 6 as shown in FIG. 20 for abutment with the target object W may be separately arranged, and the contact section 6 may be brought into contact with the target object W. Also, for example, by performing printing while bringing the contact section 6 into contact with a position that does not overlap with the printing area of the target object W or with an area of the printing area that has not been printed on yet, it is possible to suppress contact with the ink I that has not dried completely. Therefore, printing can be performed with higher accuracy. It should be noted that, in the illustrated example, the contact section 6 protrudes from the holding member 59, the configuration of the contact section 6 is not particularly limited.

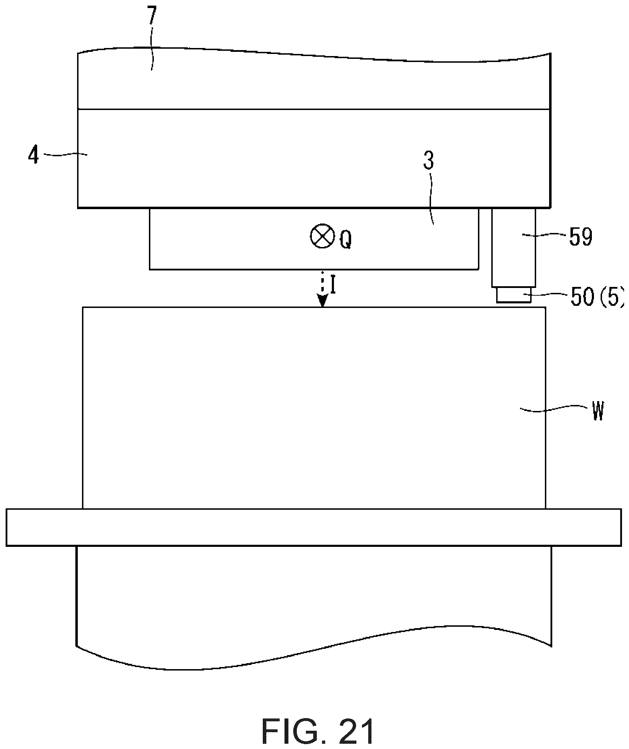

When contact between the optical tracking sensor 50 and the target object W is detected by the force sensor 7, the optical tracking sensor 50 is controlled to be slightly separated from the target object W so that the optical tracking sensor 50 and the target object W are not in contact with each other so that, as shown in FIG. 21, the print head 3 can be moved so as to trace close to the surface of the target object W. According to this method, the separation distance between the print head 3 and the target object W can be made smaller and also the variation of the separation distance can be suppressed, so that printing can be performed with higher accuracy.

As described above, in the robot system 1 of the present embodiment, the robot 10 has the force sensor 7 for detecting contact with the target object W, and the position of the print head 3 is corrected based on the detection result of the force sensor 7. By this, variations in the separation distance between the print head 3 and the target object W can be suppressed, and printing can be performed with higher accuracy.

While the printing method and the robot system of the present disclosure have been described with reference to the illustrated embodiments, the present disclosure is not limited to this, and the configurations and steps of the respective parts can be replaced with arbitrary configurations and steps having similar functions. For example, processes such as conveyor tracking, adhesive application, polishing, and welding can be substituted, and any tool can be used in place of the print head. Other optional components and steps may be added to the present disclosure. The embodiments may be appropriately combined.

## Claims

1. A printing method using a robot, the robot having a robot main body provided with a robot arm, a print head arranged on the robot arm, and an optical sensor that is provided with an imaging element for imaging a target object and that has a constant relative positional relationship with the print head, the printing method being for performing a printing operation on the target object by relatively moving the target object and the print head along a printing trajectory, the printing method comprising:
detecting the actual position of the print head by moving the print head along the printing trajectory and comparing two images captured by the imaging element at different imaging timings and
correcting a position of the print head based on a deviation of the actual position from the printing trajectory.

2. The printing method according to claim 1, wherein
the optical sensor is an optical tracking sensor and includes
a light source,
a lens member configured to irradiate the target object with light from the light source, and
an imaging element that receives the light reflected by the target object, and
detects the movement amount of the print head by comparing brightness information of the two images.

3. The printing method according to claim 2, wherein
the optical sensor irradiates the target object with light from an oblique direction.

4. The printing method according to claim 2, wherein
the printing trajectory is constituted by a translational motion of the print head.

5. The printing method according to claim 1, wherein
the robot has a force sensor for detecting contact with the target object and
the position of the print head is corrected based on a detection result of the force sensor.

6. The printing method according to claim 1, wherein
the robot has a movement stage that is disposed between the robot arm and the print head and that is for displacing the print head and
the position of the print head is corrected by driving the movement stage.

7. A robot system comprising:
a robot main body including a robot arm;
a tool disposed on the robot arm for performing an operation on a target object;
an optical sensor that includes an imaging element for capturing an image of the target object and that has a constant relative positional relationship with the tool; and
a control device configured to relatively move the target object and the tool along an operation trajectory, detect an actual position of the tool by comparing two images captured by the imaging element at different imaging timings, and correct the position of the tool based on a deviation of the actual position from the operation trajectory.

8. The robot system according to claim 7, wherein
the tool is a print head and
the operation is printing.
